Europäisches Patentamt

European Patent Office

Office européen des brevets

(19)

Veröffentlichungsnummer: **0 276 787**
**A1**

(12) **EUROPÄISCHE PATENTANMELDUNG**

(21) Anmeldenummer: 88101014.4

(22) Anmeldetag: 25.01.88

(51) Int. Cl.4: **E04B 1/80** , F24J 2/46 , F24J 2/34

(30) Priorität: 26.01.87 DE 3702214
17.02.87 DE 3738995

(43) Veröffentlichungstag der Anmeldung:
03.08.88 Patentblatt 88/31

(84) Benannte Vertragsstaaten:
CH DE ES FR GB IT LI LU NL SE

(71) Anmelder: Demowski, Marian
Dr. Fitz-Strasse 10
D-8832 Weissenburg(DE)

(72) Erfinder: Demowski, Marian
Dr. Fitz-Strasse 10
D-8832 Weissenburg(DE)

(54) **Thermoisolierungsmittel.**

(57) Thermoisolierungsmaterial, hauptsächlich in der Form von Platten, Matten und Behältern, bestehend aus luftevakuierten, entsprechend geformten Kuverts, in dem sich übereinander gestapelte Platten befinden, die voneinander und auch gegen die inneren Kuvertwände durch zerstreute bzw. verteilte Mikrostützen getrennt sind.

Fig. 6

Thermoisolierung für den breitesten Themperaturbereich der mit den hierbei verwendeten Materialien nur erreichbar ist, in flachen und räumlichen Gestaltung, im Prinzip aus einem luftevakuierten Kuvert bestehend in dem sich übereinander gestapelte Platten befinden, die voneinander und auch gegen die inneren Kuvertwände durch die Mikrostützen getrennt sind . Bei der verschiedenen Plattenmaterialien und thermischen Anwendungsbereichen handelt es sich um die jeweils zweckmäßig optimierte Plattendicke und Mikrostützenform bzw. Eigenschaften, d.h.der mittlere Abstand zwischen den einzelnen Mikrostützen, die Gebundenheit der Mikrostützen zu den platten sowie physikalische Eigenschaften können variieren. Der Strahlungsanteil am Wärmeübergang ist mit Hilfe der verspiegelten Oberflächen der Platten im Paket noch zusätzlich reduziert. Durch konstruktionsmaßnahmen lassen sich auch rein mechanische Parameter wie Konstruktionsbelastbarkeit und die thermische Dehnung optimieren. Kennzeichnend für die Konstruktionen die auf obigen Ansprüchen beruhen ist, daß sie ohne Verwendung von besonderen Konstruktionsmittel hervorragende mechanische Stabilität aufweisen, weil Elemente, die so ein Vakuummantel bilden - unter atmosphärischen Druck derart zusammengepresst sind, so daß eine, in Querrichtung hochbelastbare, in wesentlichen selbsttragende Konstruktion entsteht. Damit sind Thermobehälter, die thermoisolierende Vakuumvorteile nutzen - nicht mehr an zyllindrische Dewar-Gefäß-Form gebunden; zusätzlich entsteht beachtliche Bodenbelastbarkeit durch Luftdruckwirkung (Luft trägt mit) .

Anwendungen die sind aus Ansprüchen 4-8 resultierend, beruhen auf dem Hauptprinzip, der in ersten 3 Ansprüchen hauptsächlich dargestellt ist. In der nachfolgenden Beschreibung ist die Erfindung anhand der Zeichnung näher erläutert.

In der Zeichnung stellt dar :

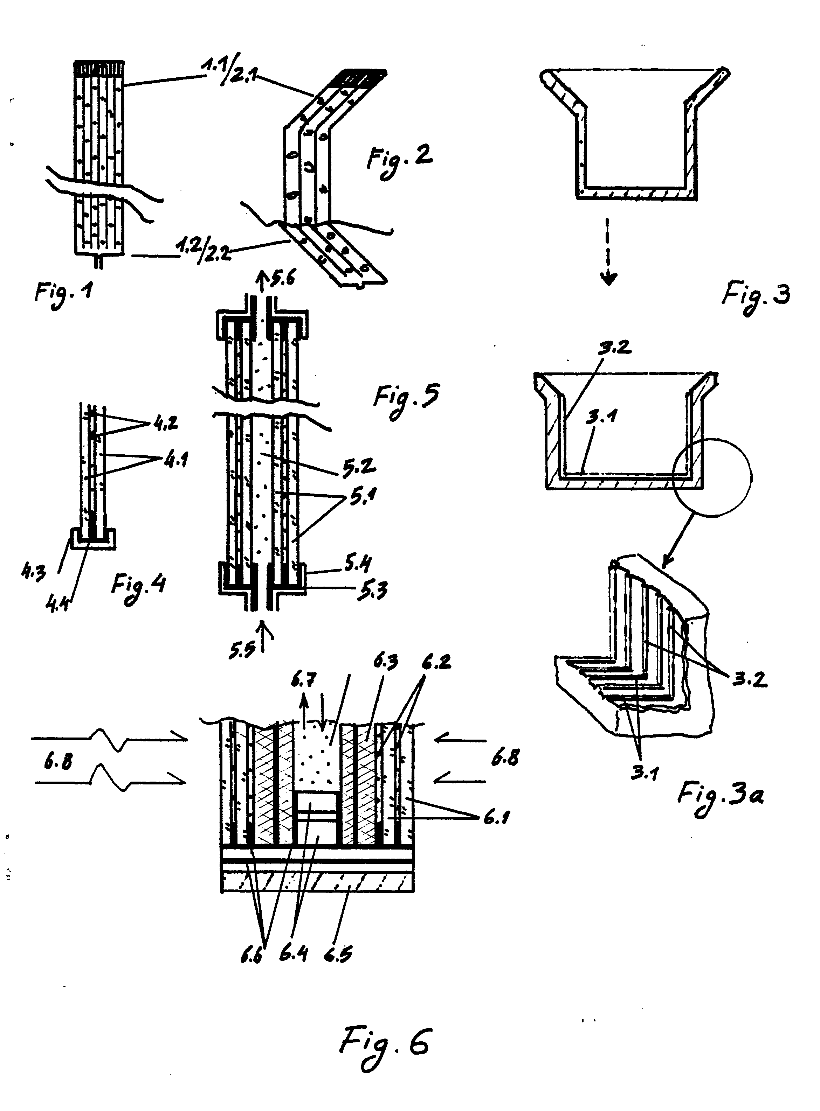

FIG.1 und FIG.2 eine schematische Querschnitt-Darstellung der Elementeneinordnung, wobei 1.1.2.1 zeigt Luftverdichtung mittels Verklebung und 1.2.2.2 eine Kuvertmantel-Ausführung

FIG.3 geht aus den Anspruch 4 hervor; beide Behälter werden rändermäßig verklebt, dann durch die nicht gezeigte Ablüftung evakuiert. 3.1-Bodenstützen; 3.2-Wandstützen

FIG.4 eine Fensterscheibe nach Anspruch 1,2,7 im Querschnitt wobei 4.1-Glasplatten; 4.2-Mikrostützen; 4.3-Metallrahmen 4.4-Verdichtung und Schutzverklebung

FIG.5 Querschnitt einer Ausführung nach Anspruch 8, wobei 5.1-Glasplatten m.Mikrostützen; 5.2-verwendete Medium; 5.3-Verdichtung und Schutzverklebung; 5.4-tragende Konstruktion; 5.5,5.6-Zuleitungen

FIG.6 entspricht dem, hauptsächlich im Anspruch 6 beschriebenen Hochleistungswandler, der als Kern des hochtemperaturfähigen Solargenerators mit hochkonzentrierter Sonnenstrahlung beidseitig "belichtet" wird. 6.1-Glasplatten; 6.2-Mikrostützen; 6.3-Keramik; 6.4-thermoisolierende Keramikeinsätze; 6.5-tragende Konstruktion; 6.6-Metallschichten; 6.7-arbeitende Medium; 6.8-Strahlung aus Reflektorfeld

## STAND DER TECHNIK. BEDEUTUNG UND VERWERTUNG DER ERFINDUNG

Bisherige Lösungen der Thermoisolierungstechniken nutzen-außer dem Dewar-Gefäß, wo ein Vakuum als Hauptisoliermittel angewendet wird-die leichte Gasfüllungen bzw. Luftschicht, wobei zusätzlich die Konvektion bzw.der Gasmassenaustausch unterdrückt wird. Mit Hilfe von verspiegelten Flächen wird der Strahlungsanteil am Wärmeübergang zusätzlich verringert. Dewargefäß-Konstruktionen sind kaum anwendbar, wenn sich z.B. um flache, unter mechanischen Druck stehende Konstruktionen bzw.größere, im wesentlichen planare Flächen handelt. Die bestehenden mikroporigen Thermoisolierungen haben überwiegend ganz spezifische, somit beengte Anwendungsbereiche. Der Erfindung lag die Aufgabe zugrunde, universelle und dennoch preiswerte Thermoisolierungsmittel zu finden.

Von den verschiedenen räumlichen Gestaltungsformen die aus Ansprüchen 1 bis 3 resultieren, sind die wichtige Clons in weiteren Ansprüchen representiert; hier aufgeführte Beispiele stellen nur ein Answahl aus vielen denkbar bedeutungsvollen praktischen Bauformen aus einer möglicher Vielfältigkeit in den verschiedenen Techniksparten dar, beginnend bei den Flachformerzeugnissen: in Bauwesen als Innen- bzw.Außenthermoisolierung als mehrkuvertige Matten; als doppel-u.mehrschichtiges Fensterglas; als hoch-und niedertemperaturtypische Sonnenkollektoren bzw.entsprechende Verkleidungen von thermischen Solaranlagen; als thermoisolierende Matten bei Förderungen unter Verwendung von Gefriertechniken; in stationären und auch beweglichen Kühl-und Klimaräumen, also in Kühlcontainern, Schiffsladeräumen, Lastkraftwagencontainern, Wohnwagen, Wohncontainern, Leichtbauten und industriellen Bauten; in industriellen Dewargefäßen als zusätzliche Außenisolierung; in industriellen Kälte-u.Wärmebehältern; als thermisches Sicherheitsschütz in Havariefällen und für Sicherheitsverkleidungen; in Haushaltsgeräten, Gefriertruhen, -schubladen, -behältern, als Herdverkleidung . Besondere Anwendung: leichte, im wesentlichen aus Metallen und Kunststoffen bestehende Matten, die zur teilweisen Begrenzung der Sonnenbestrahlung der Erdoberfläche (Strahlung wird größtenteils reflektiert, feuchtigkeit der Erdoberfläche bleibt zur Daueranpflanzung ausreichend) nachdem sie auf bzw.zwischen genügend hohen Stützpfeilern gespannt werden, besonders beim Pflanzenanbau in warmen klimatischen Zonen der Erde und zur großflächigen Rekultivierung von Halbwüsten/ Wüsten geeignet.

**Ansprüche**

1. Thermoisolierungsmaterial, dadurch gekennzeichnet, daß er aus einem luftevakuierten Kuvert besteht, in dem sich eine, oder mehrere übereinander gestapelte, flächendeckende entsprechend geformte im wesentlichen bedingt biegsame, dünne, steife, verspiegelte und wärmereflektierende Trenneinlagen befinden und alle voneinander und auch gegen beide äußeren Innenwände des luftevakuierten Raumes durch tragende Mikrostützen getrennt sind, wobei das Kuvert, die Trenneinlagen und die Mikrostützen alle aus verschiedenen oder den gleichen Materialien, wie Glas,Keramik,Kristalle,Metall,Kunststoff und/oder Kombinationen dieser Stoffe angefertigt sind, die Mikrostützen sind entweder in Form von plattengebundenen oder losen Kern/ -partikel oder fadenartigen Distanzierungselementen, beziehungsweise als schmale Wölbungen der eigentlichen Kuvertmantelwänden oder Trenneinlagen sparsam - geordnet oder ungeordnet -gestaltet und / oder verteilt, wobei die simpelste Ausführung nur aus zwei-Platten, beziehungsweise entsprechend geformten und aufeinander abgestimmten, Behälterraumgestaltenden Elementen besteht, die durch tragende Mikrostützen auseinander gehalten, rundum luftdicht verschlossen und luftevakuiert sind. dementsprechend ein thermoisolierender Kuvert ohne Verwendung von dazwischen eingelegten zusätzlichen Trenneinlagen bilden.

2. Thermoisolierungsmaterial nach Anspruch 1, dadurch gekennzeichnet, daß er als flachförmige Matte beziehungsweise als Paket von gestapelten einzelnen Kuverten gestaltet ist, wobei sowohl die vakuumräumlich getrennte,mehrkuvertige Ausführungen wie auch konstruktiv integrierte, mehrschichtige, aus thermoisolierenden.thermoleitenden und räumlich gestalteten druckfesten Schichten gemischte und/oder gestapelte Formen je nach Anwendungsart gebildet werden.

3. Thermoisolierungsmaterial nach Anspruch 1 und 2, dadurch gekennzeichnet, daß räumliche Gestaltung des Kuverts als thermoisolierender Behälter genutzt wird, indem er aus mindestens zwei ineinander eingelegten, rundum an den Rändern verschlossenen und zwischenwändig luftevakuierten Behältern besteht, deren Innenwände und Doppelböden oder auch zwischen die Doppelwände und Doppelböden eingelegte, entsprechend geformte, flächendeckende Trenneinlagen - alle voneinander und auch gegen beide äußeren Innenwände des luftevakuierten Raumes durch tragende Mikrostützen wie im Anspruch 1, getrennt sind.

4. Thermoisolierungsbehälter nach Anspruch 3, dadurch gekennzeichnet, daß es aus mindestens zwei spritzgußgeformten Einzelbehältern besteht, wobei auch Dichtränder und alle tragende schmale, rippenförmige Mikrostützen jeweils in einem Gang mit dem eigentlichen Behälter gefertigt sind.

5. Thermoisolierungsbehälter nach Anspruch 1,2,3, dadurch gekennzeichnet, daß er eine zweckbestimmend großflächige, im wesentlichen planare Konstruktion aufweist, in welchem zumindest eine Wand aus Materialien, die für Wärme-umwandelbaren Strahlunden durchläßig sind,besteht, und in dem Behälterraum ein der bekannten Strahlung/Wärme-Wandlern mit Zu-und Ableitungen nach Außen eingerichtet ist, wobei das Ganze eine Wärmekollektor-Funktion erfüllt.

6. Thermoisolierungsbehälter nach Anspruch 1,2,3,5; dadurch gekennzeichnet, daß er eine mehrschichtige, im wesentlichen planare und glaskeramische Konstruktion darstellt, in der die äußeren Schichten nach obengenannten Ansprüchen thermoisolierende und strahlungsdurchläßige Wände bilden, und in dem dickfilmartigen Behälterraum, durch die Strahlungsabsorption erwärmte, wärmetragende Flüßigkeit beziehungsweise flüßiger Metall zirkuliert, wobei die Konstruktionspakete mit zusätzlich angewendeten, drucklosen Wärmespeicherkammern mit Flüßigkeiten und/oder flüßigen Metallen oder auch mehrere verschiedene Wärme-und/oder Restwärmeaustauschsysteme, gegebenfalls auch gleichzeitig verwendet werden können.

7. Thermoisolierungsmaterial nach Anspruch 1,2, dadurch gekennzeichnet, daß er als mehrschichtiges, thermoisolierendes - gegebenfalls nach bekannten Verfahren innenbeschichtetes/verspiegeltes-Fensterglas angewendet wird.

8. Thermoisolierungsbehälter nach Anspruch 1,2,3,5,6,7; dadurch gekennzeichnet, daß in ein mehrschichtiges Paket des durchsichtigen Fensters oder Wärmekollektors zusätzlich eine strahlungs-u/o wärmeflußregulierende Schicht eingebaut ist, in der die optische Durchsichtigkeit für IR-Anteil u/o Strahlungabsorptionsgrad u/o Strahlungreflektionsgrad durch bekannte elektrochemische u/o elektrophysikalische Methoden oder auch durch die variable Füllhöhe von zweckbestimmend eigesetzten Flüßigkeiten -je nach Bedarf - veränderbar.

einstellbar oder regelbar wird, was direkte Anwendung als regelbare, halbdurchsichtige Heiz- bzw.Kühlkörper möglich macht, da die Re-Strahlung nach Innen bzw.-Außen eine gut dosierbare, somit effiziente Wärmeaufnahme -bzw.Abgabe , oder aber auch die optische Trennung bewirkt.

0 276 787

Fig. 1

Fig. 2

Fig. 3

Fig. 3a

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-1 943 042 (BECKER)<br>* Seite 4, Zeilen 7-32; Seite 5, Zeilen 1-30; Seite 6, Zeilen 1-13; Figuren 1-4 *<br>--- | 1 | E 04 B 1/80<br>F 24 J 2/46<br>F 24 J 2/34 |
| A | FR-A-1 498 452 (BIERNACKI)<br>* Seite 1, Spalte 1, Zeilen 40-42; Spalte 2, Zeilen 1-42; Seite 2, Spalte 1, Zeilen 1-25; Figuren 1-3 *<br>--- | 1 | |
| A | DE-A-2 212 870 (FEILHAUER)<br>* Seite 3, Zeilen 21-22; Seite 4, Zeilen 1-23; Seite 5, Zeilen 1-22; Seite 6, Zeilen 1-22, Seite 7, Zeilen 1-21; Seite 8, Zeilen 1-20; Figuren 1-4 *<br>--- | 1,7 | |
| A | DE-A-1 941 401 (BECKER)<br>* Seite 6, Zeilen 1-29; Seite 7, Zeilen 1-26; Seite 8, Zeilen 1-26; Seite 9, Zeilen 1-26; Seite 10, Zeilen 1-15; Figuren 1-4 *<br>--- | 1,7 | RECHERCHIERTE SACHGEBIETE (Int. Cl.4)<br><br>E 04 B<br>F 24 J |
| A | US-A-3 921 844 (WALLES)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 05-04-1988 | SCHOLS W.L.H. |